# EUROPÄISCHE PATENTSCHRIFT

(11) **EP 0 402 855 B1**
(45) Veröffentlichungstag und Bekanntmachung des Hinweises auf die Patenterteilung: **25.08.1993**
(21) Anmeldenummer: 90111094.0
(22) Anmeldetag: 12.06.1990
(51) Int. Cl.: B29C 55/28, B29C 47/90, B29D 7/01

(54) **Vorrichtung zur Herstellung einer Schlauchfolie aus thermoplastischem Kunststoff**
Apparatus for manufacturing a tubular film from thermoplastic resin
Dispositif pour la fabrication d'une pellicule tubulaire en résine thermoplastique

(30) Priorität: 15.06.1989 IL 90625
(43) Veröffentlichungstag der Anmeldung: 19.12.1990
(73) Patentinhaber: Rom, Israel, Kibutz Ginegar 30 053 (IL)
(72) Erfinder: Rom, Israel, Kibutz Ginegar 30 053 (IL)
(74) Vertreter: Andrejewski, Walter

(56) Entgegenhaltungen:
- DE-A- 1 504 804
- DE-A- 1 629 692
- DE-B- 1 504 725
- DE-B- 1 704 573

## Beschreibung

Die Erfindung betrifft eine Vorrichtung zur Herstellung einer Schlauchfolie aus thermoplastischem Kunststoff, der in einem vorgeschalteten Extruder thermoplastifiziert wird, - mit
einem Düsenkopf,
einer Ringspaltdüse für den kontinuierlichen Austritt eines thermoplastifizierten Kunststoffschlauches,
einer Einrichtung zum Aufblasen des Kunststoffschlauches zu einer Schlauchfolienblase, die kontinuierlich abgezogen wird und
einer Kühlluft-Kühlvorrichtung für die Innenkühlung der Schlauchfolienblase oberhalb der Ringspaltdüse,
wobei die Kühlluft-Kühlvorrichtung ein Kühlaggregat und eine Umwälzeinrichtung für die Kühlluft aufweist, wobei das Kühlaggregat einen Wärmetauscher besitzt, mit dem die Umwälzeinrichtung kombiniert ist, und wobei der Wärmetauscher einerseits mit dem Innenraum der Schlauchfolienblase in Verbindung steht. - Es versteht sich, daß bei solchen Vorrichtung regelmäßig auch eine Einrichtung für die Außenkühlung der Schlauchfolienblase vorgesehen ist. Im Rahmen der Erfindung kann der Düsenkopf feststehend angeordnet sein oder kontinuierlich bzw. alternierend rotieren.

Bei der bekannten Vorrichtung, von der die Erfindung ausgeht (DE-A- 15 04 804), ist das Kühlaggregat für die Innenkühlung ein der Schlauchfolienblase angepaßter, im oberen Teil zylindrischer Kühlwasserbehälter mit Kühlwasserzuführung und Wasserabführung. Die auf diese Weise erreichbare Kühlung ist bei modernen Vorrichtungen zur Herstellung von Schlauchfolien nicht ausreichend und häufig auch über den Umfang der Schlauchfolienblase nicht hinreichend gleichmäßig. Das gilt auch für eine ähnliche Ausführungsform (GB-PS 10 72 174), bei der mit schraubenwendelförmig geführten Kühlschlangen gearbeitet wird. Im übrigen kennt man Vorrichtungen des eingangs beschriebenen Aufbaus (DE-AS 12 11 379, GB-PS 10 72 174) bei der das Aufblasen des thermoplastifizierten Kunststoffschlauches zur Schlauchfolienblase mit Hilfe von sogenannter Stützluft erfolgt und nur Leckverluste nachgeführt werden. Man kennt aber auch Vorrichtungen, bei denen mit sogenannter Blasluft gearbeitet wird (DE-OS 23 06 834), wobei ein großer Mengenstrom gekühlter Blasluft für die Innenkühlung in die Schlauchfolienblase eingeführt und ein entsprechender Mengenstrom aus der Schlauchfolienblase abgeführt wird, wobei die Kühlung über den gekühlt zugeführten Mengenstrom erfolgt und das Abführen so vorgenommen wird, daß die Schlauchfolienblase ihren aufgeblasenen Zustand beibehält. Hier hängt die erreichte Kühlwirkung davon ab, wie weit die Mengenströme beherrschbar sind, ohne die Schlauchfolienblase störend zu beeinflussen oder sogar zu zerstören.

Der Erfindung liegt die Aufgabe zugrunde, eine Vorrichtung des eingangs beschriebenen Aufbaus so weiter auszubilden, daß eine wesentlich verbesserte Kühlung erreicht wird.

Zur Lösung dieser Aufgabe lehrt die Erfindung, daß die Kühlluft-Kühlvorrichtung eine ringförmige Kühlkammer aufweist, die mit einem der Schlauchfolienblase angepaßten Düsenboden für den Austritt der Kühlluft versehen ist, andererseits ein Kanalsystem angeschlossen ist, welches zu der ringförmigen Kühlkammer geführt ist. - Die Erfindung beruht auf der Erkenntnis, daß eine intensive Innenkühlung der Schlauchfolienblase eine Luftkühlung sein muß, daß die Luft dazu im Innern der Schlauchfolienbase gekühlt oder zusätzlich gekühlt werden muß, und daß eine ringförmige Kühlkammer für der kontrollierten Austritt der gekühlten Luft erforderlich ist. Dabei läßt sich gleichzeitig eine sehr gleichmäßige Kühlung erreichen, wenn die ringförmige Kühlkammer in der beschriebenen Weise mit einem der Schlauchfolienblase angepaßten Düsenboden versehen ist.

Im einzelnen bestehen im Rahmen der Erfindung mehrere Möglichkeiten der weiteren Ausbildung und Gestaltung. Eine bevorzugte Ausführungsform der Erfindung, die es erlaubt, die erfindungsgemäße Vorrichtung unterschiedlichen Betriebsverhältnissen, insbes. auch unterschiedlichen Kunststoffen und unterschiedlichen Wanddicken der Schlauchfolie anzupassen, ist dadurch gekennzeichnet, daß der Düsenboden verstellbare Düsenöffnungen aufweist, z. B. in Form von umlaufenden Schlitzdüsen. Auf diese Weise läßt sich durch Einstellung der Düsen auch eine über den gesamten Umfang der Schlauchfolienblase gleichmäßige Kühlung erreichen. Eine bevorzugte Ausführungsform der Erfindung, bei der eine sehr hohe Kühlleistung erreicht werden kann, ist dadurch gekennzeichnet, daß das Kühlaggregat mit seinem Kälteteil in der Schlauchfolienblase und mit seinem heißen Teil außerhalb der Schlauchfolienblase und außerhalb des Düsenkopfes angeordnet ist. Der Wärmetauscher ist vorzugsweise als Gitterrost oder Plattenrost ausgeführt, so daß dem zu kühlenden Luftstrom eine sehr große Wärmetauscherfläche angeboten werden kann. Sie kann mit Kühlrippen besetzt sein. Die Umwälzeinrichtung kann oberhalb des Wärmetauschers in der Schlauchfolienblase angeordnet sein. Nach bevorzugter Ausführungsform der Erfindung weist die Umwälzeinrichtung ein Flügelrad auf, welches unterhalb des Wärmetauschers in einer von dem Wärmetauscher gleichsam abgedeckten Kammer angeordnet ist, die mit dem Kanalsystem in Verbindung steht. Der Antrieb der Umwälzeinrichtung ist vorzugsweise außerhalb der Schlauchfolienblase und unterhalb des Düsenkopfes angeordnet. Auf diese Weise wird die Kühlung durch die Abwärme des Antriebsmotors der Umwälzeinrichtung nicht belastet. Da diese Antriebsleistung klein ist, kommt man aber auch dann zu guten Ergebnissen, wenn der Antrieb für die Umwälzeinrichtung innerhalb der Schlauchfolienblase angeordnet ist.

Nach bevorzugter Ausführungsform der Erfindung sind nicht nur die Düsenöffnungen, sondern auch die Kühlleistung des Kühlaggregates und/oder die Leistung der Umwälzeinrichtung nach Maßgabe unterschiedlicher Betriebsverhältnisse steuerbar oder regelbar.

Bei der erfindungsgemäßen Vorrichtung kann die Einrichtung zum Aufblasen des Kunststoffschlauches zur Schlauchfolienblase mit Stützluft arbeiten, die in der Schlauchfolienblase im Kreislauf geführt und dabei wie beschrieben gekühlt wird. Bei dieser Ausführungsform werden lediglich Leckverluste ausgeglichen. Es besteht aber auch die Möglichkeit, die Anordnung so zu treffen, daß die Einrichtung zum Aufblasen des Kunststoffschlauches zur Schlauchfolienblase mit Blasluft erfolgt, die in der eingangs beschriebenen Weise zuvor gekühlt worden ist, wobei ein angepaßter Mengenstrom dieser Blasluft auch wieder abgeführt wird, unabhängig davon aber in der beschriebenen Weise ein Teil der Blasluft als Kühlluft im Kreislauf geführt und wie beschrieben über den Wärmetauscher und die ringförmige Kammer mit dem Düsenboden für den Austritt der Kühlluft geführt wird. Hier ist eine besonders intensive Kühlung erreichbar, weil gleichsam zwei Kühlsysteme, nämlich das für die gekühlt zugeführte Blasluft und das in der Schlauchfolienblase, kombiniert werden.

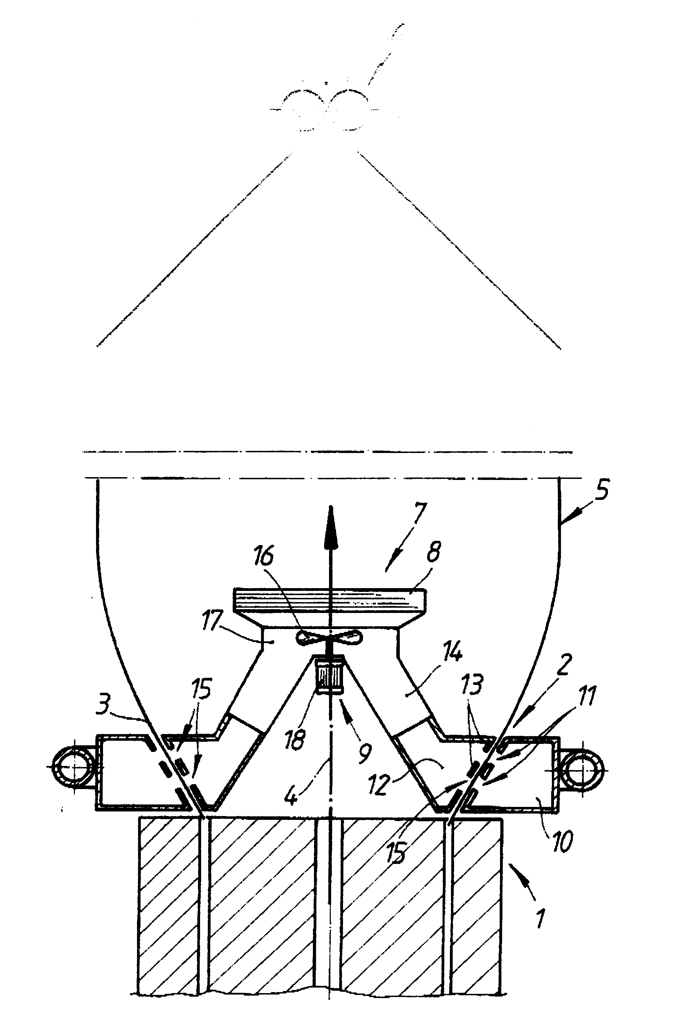

Im folgenden wird die Erfindung anhand einer lediglich ein Ausführungsbeispiel darstellenden Zeichnung ausführlicher erläutert. Die einzige Figur zeigt schematisch ein Beispiel einer erfindungsgemäßen Vorrichtung teilweise im Vertikalschnitt.

Die in der Figur dargestellte Vorrichtung dient zur Herstellung einer Schlauchfolie aus thermoplastischem Kunststoff, der in einem vorgeschalteten, nicht gezeichneten Extruder thermoplastifiziert wird. Zum grundsätzlichen Aufbau der Vorrichtung gehören ein Düsenkopf 1, eine Ringspaltdüse 2 für den kontinuierlichen Austritt des thermoplastifizierten Kunststoffschlauches 3, eine nur durch eine strichpunktierte, gepfeilte Linie angedeutete Einrichtung 4 zum Aufblasen des Kunststoffschlauches zu einer Schlauchfolienblase 5, die kontinuierlich abgezogen wird, und zwar im Ausführungsbeispiel über Abquetschwalzen 6, und eine Kühlluft-Kühlvorrichtung 7 für die Innenkühlung der Schlauchfolienblase 5 oberhalb der Ringspaltdüse 2. Die Kühlluft-Kühlvorrichtung 7 weist ein Kühlaggregat 8 und eine Umwälzeinrichtung 9 für die Kühlluft auf. Es versteht sich, daß außerdem eine Außenkühlung stattfindet, und zwar mit Blasluft, die einem Ringkanal 10 zugeführt wird, der Düsenöffnungen 11 für die Außenkühlung aufweist. Die Außenkühlluft kann in einem besonderen Kühlaggregat gekühlt worden sein.

Die Kühlluft-Kühlvorrichtung 7 für die Innenkühlung weist eine ringförmige Kühlkammer 12 auf, die mit einem der Schlauchfolienblase 5 angepaßten Düsenboden 13 für den Austritt der Kühlluft versehen ist. Das Kühlaggregat 8 besteht aus einem Wärmetauscher, mit dem die Umwälzeinrichtung 9 kombiniert ist. An den Wärmetauscher 8, der einerseits mit dem Innenraum der Schlauchfolienblase 5 in Verbindung steht, ist andererseits ein Kanalsystem 14 angeschlossen, welches zu der ringförmigen Kühlkammer 12 führt. Es versteht sich, daß die Düsenöffnungen 15 in dem Düsenboden 13 verstellbar sein können, was nicht gezeichnet wurde. Die Düsenöffnungen 15 in dem Düsenboden 13 mögen im Ausführungsbeispiel Schlitzdüsen sein. Der heiße Teil des Kühlaggregates 8 wurde nicht gezeichnet. Er befindet sich außerhalb der Schlauchfolienblase 5. Die Zuführung des Kältemittels zu dem Wärmetauscher 8 erfolgt über Bohrungen und Schlauchleitungen die entsprechend wärmeisoliert sind. Der Wärmetauscher 8 mag ein Gitterrost oder ein Plattenrost sein, wobei durch die Gitterstäbe oder Gitterplatten das Kältemittel strömt.

Im Ausführungsbeispiel und nach bevorzugter Ausführungsform der Erfindung weist die Umwälzeinrichtung 9 ein Flügelrad 16 auf, welches unterhalb des Wärmetauschers 8 in einer von dem Wärmetauscher 8 gleichsam abgedeckten Kammer 17 angeordnet ist, die mit dem Kanalsystem 14 in Verbindung steht. Der Antrieb 18 der Umwälzeinrichtung 9 befindet sich im Ausführungsbeispiel innerhalb der Schlauchfolienblase 5 unterhalb der vorstehend erwähnten Kammer 17. Der Antrieb könnte jedoch auch eine Welle aufweisen, deren Antriebsmotor außerhalb der Schlauchfolienblase 5 angeordnet ist, so daß die Abwärme des Antriebsmotors nicht in die Schlauchfolienblase 5 gelangt. Die Kühlleistung und/oder die Leistung der Umwälzeinrichtung 9 sind nach Maßgabe unterschiedlicher Betriebsverhältnisse steuerbar oder regelbar.

Es versteht sich, daß die Einrichtung zum Aufblasen des Kunststoffschlauches 3 zur Schlauchfolienblase 5, wie eingangs und weiter oben erläutert, über Stützluft oder über Blasluft erfolgen kann, wozu auf die üblichen Technologien zurückgegriffen wird.

## Patentansprüche

1. Vorrichtung zur Herstellung einer Schlauchfolie aus thermoplastichem Kunststoff, der in einem vorgeschalteten Extruder thermoplastifiziert wird, - mit
einem Düsenkopf (1),
einer Ringspaltdüse (2) für den kontinuierlichen Austritt eines thermoplastifizierten Kunststoffschlauches (3),
einer Einrichtung (4) zum Aufblasen des Kunststoffschlauches (3) zu einer Schlauchfolienblase (5), die kontinuierlich abgezogen wird und
einer Kühlluft-Kühlvorrichtung (7) für die Innenkühlung der Schlauchfolienblase (5) oberhalb der Ringspaltdüse (2),
wobei die Kühlluft-Kühlvorrichtung ein Kühlaggregat und eine Umwälzeinrichtung für die Kühlluft aufweist, wobei das Kühlaggregat (8) einen Wärmetauscher besitzt, mit dem die Umwälzeinrichtung (9) kombiniert ist, und wobei der Wärmetauscher (8) einerseits mit dem Innenraum der Schlauchfolienblase in Verbindung steht, **dadurch gekennzeichnet**, daß die Kühlluft-Kühlvorrichtung (7) eine ringförmige Kühlkammer (12) aufweist, die mit einem der Schlauchfolienblase (5) angepaßten Düsenboden (13) für den Austritt der Kühlluft versehen ist, und daß an den Wärmetauscher (8) andererseits ein Kanalsystem (14) angeschlossen ist, welches zu der ringförmigen Kühlkammer (12) geführt ist.

2. Vorrichtung nach Anspruch 1, dadurch gekennzeichnet, daß der Düsenboden (13) verstellbare Düsenöffnungen (15) aufweist, z. B. in Form von umlaufenden Schlitzdüsen.

3. Vorrichtung nach einem der Ansprüche 1 oder 2, dadurch gekennzeichnet, daß das Kühlaggregat (8) mit seinem Kaltteil in der Schlauchfolienblase (5) und mit seinem Heißteil außerhalb der Schlauchfolienblase und außerhalb des Düsenkopfes (1) angeordnet ist.

4. Vorrichtung nach einem der Ansprüche 1 bis 3, dadurch gekennzeichnet, daß der Wärmetauscher (8) als Gitterrost oder Plattenrost ausgeführt ist.

5. Vorrichtung nach einem der Ansprüche 1 bis 4, dadurch gekennzeichnet, daß die Umwälzeinrichtung (9) ein Flügelrad (16) aufweist, welches unterhalb des Wärmetauschers (8) in einer von dem Wärmetauscher (8) abgedeckten Kammer (17) angeordnet ist, die mit dem Kanalsystem (14) in Verbindung steht.

6. Vorrichtung nach einem der Ansprüche 1 bis 5, dadurch gekennzeichnet, daß der Antrieb der Umwälzeinrichtung (9) außerhalb der Schlauchfolienblase und des Düsenkopfes angeordnet ist.

7. Vorrichtung nach einem der Ansprüche 1 bis 5, dadurch gekennzeichnet, daß der Antrieb (18) der Umwälzeinrichtung (9) innerhalb der Schlauchfolienblase angeordnet ist.

8. Vorrichtung nach einem der Ansprüche 1 bis 7, dadurch gekennzeichnet, daß die Kühlleistung des Kühlaggregates (8) und/oder die Leistung der Umwälzvorrichtung (9) nach Maßgabe unterschiedlicher Betriebsverhältnisse steuerbar oder regelbar sind.

9. Vorrichtung nach einem der Ansprüche 1 bis 8, dadurch gekennzeichnet, daß die Einrichtung (4) zum Aufblasen des Kunststoffschlauches (3) zur Schlauchfolienblase (5) mit Stützluft arbeitet.

10. Vorrichtung nach einem der Ansprüche 1 bis 8, dadurch gekennzeichnet, daß die Einrichtung (4) zum Aufblasen des Kunststoffschlauches (3) zur Schlauchfolienblase (5) mit Blasluftzuführung, vorzugsweise Zuführung von gekühlter Blasluft, und, Blasluftabführung erfolgt.

## Claims

1. An apparatus for manufacturing a flexible tubular film of synthetic thermoplastic material which is thermally plasticised in an upstream extruder, - with
a nozzle head (1),
an annular gap nozzle (2) for the continuous discharge of a thermally plasticised flexible plastic tube (3),
a device (4) for inflating the flexible plastic tube (3) to form a flexible tubular film blister (5) which is continuously drawn off, and
a cooling air cooling apparatus (7) for the internal cooling of the flexible tubular film blister (5) above the annular gap nozzle (2),
wherein the cooling air cooling apparatus comprises a cooling unit and a circulation device for the cooling air, wherein the cooling unit (8) has a heat exchanger with which the circulation device (9) is combined, and wherein one side of the heat exchanger (8) is connected to the internal space of the flexible tubular film blister (5), characterised in that the cooling air cooling apparatus (7) has an annular cooling chamber (12) which is provided with a nozzle base (13) adapted to the flexible tubular film blister (5) for the discharge of the cooling air, and that a system of ducts (14) which is led to the annular cooling chamber (12) is attached to the other side of the heat exchanger (8).

2. An apparatus according to claim 1, characterised in that the nozzle base (13) has adjustable nozzle openings (15), e.g. in the form of circulatory slot nozzles.

3. An apparatus according to one of claims 1 or 2, characterised in that the cooling unit (8) is arranged with its cold portion inside the flexible tubular film blister (5) and with its hot portion outside the flexible tubular film blister and is disposed outside the nozzle head (1).

4. An apparatus according to any one of claims 1 to 3, characterised in that the heat exchanger (8) is constructed as a grating or as a plate grid.

5. An apparatus according to any one of claims 1 to 4, characterised in that the circulation device (9) has an impeller wheel (16) which is disposed below the heat exchanger (8) in a chamber (17) which is covered by the heat exchanger (8) and which is connected to the system of ducts (14).

6. An apparatus according to any one of claims 1 to 5, characterised in that the drive for the circulation device (9) is disposed outside the flexible tubular film blister and outside the nozzle head.

7. An apparatus according to any one of claims 1 to 5, characterised in that the drive (18) for the circulation device (9) is disposed inside the flexible tubular film blister.

8. An apparatus according to any one of claims 1 to 7, characterised in that the cooling output of the cooling unit (8) and/or the output of the circulation device (9) can be controlled or regulated in accordance with different operating conditions.

9. An apparatus according to any one of claims 1 to 8, characterised in that the device (4) for inflating the flexible plastic tube (3) to form a flexible tubular film blister (5) operates with auxiliary air.

10. An apparatus according to any one of claims 1 to 8, characterised in that the device (4) for inflating the flexible plastic tube (3) to form a flexible tubular film blister (5) operates with a supply of blast air, preferably a supply of cooled blast air, and the blast air is discharged.

## Revendications

1. Dispositif pour fabriquer une feuille tubulaire en une matière thermoplastique, qui est thermoplastifiée dans une extrudeuse installée en amont, - comportant
une tête de buse (1),
une buse à fente annulaire (2) pour la délivrance continue d'un tuyau en matière plastique thermoplastifié (3),
un dispositif (4) pour gonfler le tuyau en matière plastique (3) pour former une bulle (5) constituée par la feuille tubulaire et qui est tirée continûment à l'extérieur, et
un dispositif de refroidissement par air froid (7) pour le refroidissement à l'intérieur de la bulle (5) formée par la feuille tubulaire, au-dessus de la buse à fente annulaire (2),
le dispositif de refroidissement par air froid possédant une unité de refroidissement et un dispositif de circulation pour l'air de refroidissement, tandis que l'unité de refroidissement (8) possède un échangeur de chaleur combiné au dispositif de circulation (9), et que l'échangeur de chaleur (8) est pour sa part raccordé à l'espace intérieur de la bulle (9) formée par la feuille tubulaire, caractérisé en ce que le dispositif de refroidissement par air froid (7) comporte une chambre annulaire de refroidissement (12), qui est équipée d'un fond à buses (13), adapté à la bulle (5) formée par la feuille tubulaire, pour la sortie de l'air de refroidissement, et que d'autre part à l'échangeur de chaleur (8) est raccordé un système de canaux (14), qui aboutit à la chambre annulaire de refroidissement (12).

2. Dispositif selon la revendication 1, caractérisé en ce que le fond à buses (13) comporte des ouvertures de buses réglables (15), par exemple sous la forme de buses à fentes circonférentielles.

3. Dispositif selon l'une des revendications 1 ou 2, caractérisé en ce que l'unité de refroidissement (8) est disposée, par sa partie froide, dans la bulle (5) formée par la feuille tubulaire et, par sa partie chaude, à l'extérieur de la bulle formée par la feuille tubulaire à l'extérieur de la tête porte-buse (1).

4. Dispositif selon l'une des revendications 1 à 3, caractérisé en ce que l'échangeur de chaleur (8) est réalisé sous la forme d'une grille de barreaux ou d'une grille de plaques.

5. Dispositif selon l'une des revendications 1 à 4, caractérisé en ce que le dispositif de circulation (9) comporte une roue à ailettes (16), qui est disposée au-dessous de l'échangeur de chaleur (8), dans une chambre (17) qui est recouverte par l'échangeur de chaleur (8) et qui est raccordée au système de canaux (14).

6. Dispositif selon l'une des revendications 1 à 5, caractérisé en ce que le dispositif d'entraînement du dispositif de circulation (9) est disposé à l'extérieur de la bulle formée par la feuille tubulaire et de la tête de buse.

7. Dispositif selon l'une des revendications 1 à 5, caractérisé en ce que le dispositif d'entraînement (18) du dispositif de circulation (9) est disposé à l'intérieur de la bulle formée d'une feuille tubulaire.

8. Dispositif selon l'une des revendications 1 à 7, caractérisé en ce que la puissance de refroidissement de l'unité de refroidissement (8) et/ou la puissance du dispositif de circulation (9) sont commandables ou réglables en fonction de différentes conditions de service.

9. Dispositif selon l'une des revendications 1 à 8, caractérisé en ce que le dispositif (4) servant à gonfler le tuyau en matière plastique (3) pour former la bulle (5) formée par la feuille tubulaire travaille avec de l'air de soutien.

10. Dispositif selon l'une des revendications 1 à 8, caractérisé en ce que le dispositif (4) servant à gonfler le tuyau en matière plastique (3) pour former la bulle (5) formée d'une feuille tubulaire s'effectue au moyen de l'envoi d'un air de soufflage, de préférence au moyen de l'envoi d'un air de soufflage refroidi, et d'une évacuation de l'air de soufflage.
